(19) **Europäisches Patentamt / European Patent Office / Office européen des brevets**

(11) **EP 1 133 068 B1**

(12) **EUROPEAN PATENT SPECIFICATION**

(45) Date of publication and mention
of the grant of the patent:
**30.07.2008 Bulletin 2008/31**

(51) Int Cl.:
*H04B 1/707* (2006.01)  *H04J 13/00* (2006.01)

(21) Application number: **01200078.2**

(22) Date of filing: **11.01.2001**

(54) **Guard codes for S-CDMA systems**

Schutzkodes für S-CDMA Systeme

Codes de garde pour systèmes à S-AMRC

(84) Designated Contracting States:
**DE FR GB**

(30) Priority: **11.01.2000 US 481317**

(43) Date of publication of application:
**12.09.2001 Bulletin 2001/37**

(73) Proprietor: **Texas Instruments Incorporated
Dallas, TX 75251 (US)**

(72) Inventors:
• **Sherman, Itay
Boulder, CO 80304 (US)**

• **Shalvi, Ofir
47226 Herzlia (IL)**
• **Yagil, Ariel
47441 Ramat Hasharon (IL)**

(74) Representative: **Holt, Michael
Texas Instruments Limited
European Patents Department
800 Pavilion Drive
Northampton, NN4 7YL (GB)**

(56) References cited:
**WO-A-99/59266     US-A- 5 991 333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE INVENTION

The present invention relates to a common Synchronous-CDMA (S-CDMA) system.

BACKGROUND OF THE INVENTION

In S-CDMA systems a high level of synchronization between transmitting sources is required, in order to avoid interference between different codes. This requirement imposes high cost and risk to S-CDMA systems. Aspects of such systems are described in International Patent Application WO 99/59266 and United States Patent 5,991,333.

SUMMARY OF THE INVENTION

The present invention is defined by the features of claim 1. Further embodiments are defined in the dependent claims.

BRIEF DESCRIPTION OF THE DRAWINGS

For a more complete understanding of the present invention, and the advantages thereof, reference is now made to the following detailed description taken in conjunction with the accompanying drawings, in which:

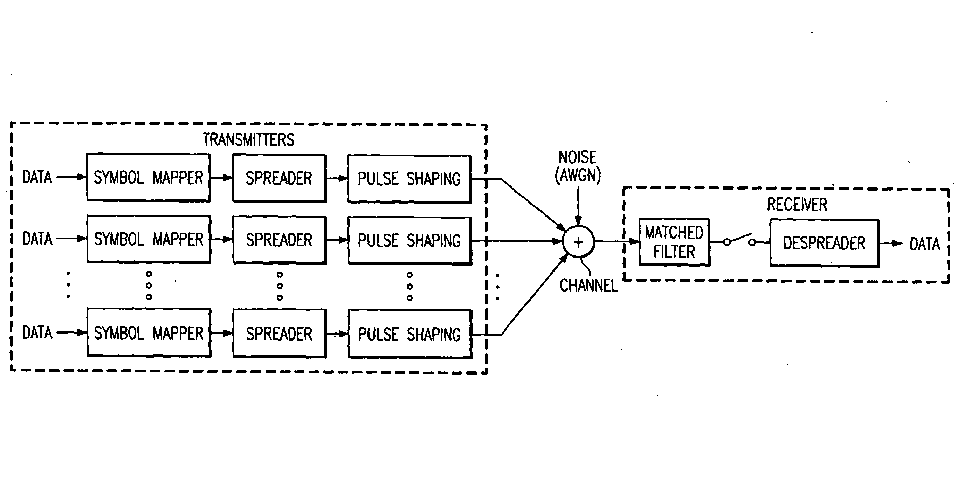

Figure 1 shows a common Synchronous-CDMA (S-CDMA) system.

DETAILED DESCRIPTION

A common Synchronous-CDMA (S-CDMA) system is shown in Figure 1. In this system N data symbols are transmitted at the same time from up to N different synchronized sources (each source can transmit one or more data symbols at a given time). Each of these symbols is multiplied by a different spreading code (consisting of N bits). The sequences of the spread symbols are summed (resulting in N "chips"):

$$\underline{p} = \underline{s}^T \cdot \underline{\underline{C}}$$

where $\underline{s}$ is the vector of the N transmitted symbols, $\underline{C}$ is the matrix of spreading codes (each row in C is a spreading code), and $\underline{p}$ is the sequence of then N transmitted chips.
The N spreading codes are orthogonal:

$$\underline{\underline{C}} \cdot \underline{\underline{C}}^T = I \ .$$

In some S-CDMA systems there is one basic code $\underline{C}_0$ and all the other codes are generated by cyclically shifting the basic code:

$$C_i[n] = C_0[(n+i) \bmod N], \quad n = 0 \ldots N-1$$

The invention is also applicable in cases where the spreading codes are not exactly shifted versions of the basic code, but are highly correlated with the shifted versions. It is also applicable when a few (n<<N) codes are not shifted versions of the basic code at all.
After spreading, the chips are fed into a pulse-shaping filter and transmitted to the channel. In the receiver, the signal is fed into a matched filter and sampled. It is assumed that the convolution of transmitter's shaping filter with the receiver's matched filter is a Nyquist-I filter (e.g. raised-cosine), i.e. there is no inter-symbol interference between the chips (when the sources are synchronized). If we assume that all the transmitting sources are perfectly synchronized, (i.e. the symbol timing at the receiver is identical for all the sources), then the sequence at the matched filter output is

$\underline{p}$ (plus channel noise). Multiplying the matched filter output by the transpose of the spreading matrix would recover the transmitted symbols. This operation is called despreading:

$$\underline{\hat{s}} = (\underline{p} + \underline{n}) \cdot \underline{\underline{C}}^T = \underline{s} \cdot \underline{\underline{C}} \cdot \underline{\underline{C}}^T + \tilde{n} = \underline{s} + \tilde{n}$$

However, this behavior is achieved only when the transmitting sources are fully synchronized. In real (non-ideal) systems, full synchronization cannot be achieved. In this case there will be some degree of interference between symbols that are transmitted from different sources. It can be shown that the recovered symbol sequence will be as follows (for the case of two transmitting sources):

$$\underline{\hat{s}} = M\underline{s} + \underline{\tilde{n}}$$

$$M = \begin{bmatrix} 1 & & & & \ddots & & & & & & \\ & \ddots & & (0) & & R_4 & \ddots & & & & \\ & & 1 & & & R_3 & \ddots & \ddots & & & \\ & & & 1 & & R_2 & R_3 & \ddots & \ddots & & \\ & (0) & & & 1 & R_1 & R_2 & R_3 & R_4 & \ddots & \\ \ddots & R_{-4} & R_{-3} & R_{-2} & R_{-1} & R_0 & & & & & \\ \ddots & \ddots & R_{-3} & R_{-2} & & R_0 & & & (0) & \\ & \ddots & \ddots & R_{-3} & & & R_0 & & & \\ & & \ddots & R_{-4} & & & & R_0 & & \\ & & & \ddots & & (0) & & & \ddots & \\ & & & & & & & & & \ddots & \\ & & & & & & & & & & R_0 \end{bmatrix}$$

$$R_n = g(t - nT - \tau)$$

where g is the Nyquist-I pulse shape (e.g. raised cosine) and $\tau$ is the timing difference between the two sources.

It can be seen from the equations that the symbols of each source are interfered by the symbols of the other source. The most significant interference comes from the terms $R_1$ and $R_{-1}$. These terms are the interference between two symbols that are spread by "adjacent" codes (codes with adjacent indices). Therefore, a significant decrease in the interference can be achieved if adjacent codes are not allocated to different sources. This can be achieved by allocating to each source a block of codes with consecutive indices, leaving one "guard" code between these blocks. For example, if N=128 and there are two sources, one source would use codes 0 to 45, and the second source would use codes 47 to 126. Codes 46 and 127 would not be used.

This method allows a significant relaxation of the timing requirements of the transmitting sources, at a cost of slight decrease in the data throughput (less than 2% in the above two source examples).

A method for providing reduced interference between S/CDMA chips, comprising; selecting a first sequence of spreader functions for a first channel, and selecting a second sequence of spreader functions for a second channel, wherein said second sequence is non-overlapping with and spaced from first said sequence.

**Claims**

1. A method for providing reduced interference between spreading codes allocated to sources in an S/CDMA system, wherein
   said spreading codes comprise a plurality of codes that are derived by cyclically shifting a basic code,
   a pair of codes of said plurality which are shifted one from the other by one place being adjacent codes,

**characterised by**:

allocating a first sequence of said spreading codes to a first source; and
allocating a second sequence of said spreading codes to a second source;
specifying a guard code that is not allocated to a source such that no code of said first sequence is adjacent a code of said second sequence.

2. A method as claimed in claim 1, wherein N spreading codes ($C_i[0],.....,C_i[N-1]$) derived from a basic code $C_0$ are:

$$C_i[n] = C_0[(n + i) \bmod N], \quad n = 0 \ldots N - 1.$$

3. A method as claimed in claim 1 wherein an adjacent code is highly correlated with the cyclically shifted code.

## Patentansprüche

1. Verfahren zum Schaffen einer reduzierten gegenseitigen Störung zwischen Spreizcodes, die Quellen in einem S/CDMA-System zugewiesen sind, wobei
die Spreizcodes mehrere Codes enthalten, die durch zyklisches Verschieben eines Basiscodes abgeleitet werden, und
ein Paar von Codes der mehreren Codes, die voneinander um eine Stelle verschoben sind, aus benachbarten Codes besteht,
**gekennzeichnet durch**:

Zuweisen einer ersten Folge der Spreizcodes zu einer ersten Quelle;
Zuweisen einer zweiten Folge von Spreizcodes zu einer zweiten Quelle; und
Spezifizieren eines Schutzcodes, der keiner Quelle zugewiesen ist, derart, dass kein Code der ersten Folge einem Code der zweiten Folge benachbart ist.

2. Verfahren nach Anspruch 1, wobei N Spreizcodes ($C_i[0], \ldots C_i[N-1]$), die aus einem Basiscode $C_0$ abgeleitet werden, gegeben sind durch:

$$C_i[n] = C_0[(n + i) \bmod N], n = 0, \ldots, N - 1.$$

3. Verfahren nach Anspruch 1, wobei ein benachbarter Code mit dem zyklisch verschobenen Code hochgradig korreliert ist.

## Revendications

1. Procédé pour fournir une interférence réduite entre des codes d'étalement alloués à des sources dans un système S/CDMA, dans lequel :

lesdits codes d'étalement comprennent une pluralité de codes qui sont dérivés en décalant de manière cyclique un code de base,
une paire de codes de ladite pluralité de codes qui sont décalés l'un de l'autre d'une place étant des codes adjacents,
**caractérisé par** les étapes consistant à :

allouer une première séquence desdits codes d'étalement à une première source ; et
allouer une seconde séquence desdits codes d'étalement à une seconde source ; spécifier un code de garde qui n'est pas alloué à une source, de sorte qu'aucun code de ladite première séquence n'est adjacent à un code de ladite seconde séquence.

2. Procédé tel que revendiqué dans la revendication 1, dans lequel N codes d'étalement ($C_i[0]$, ..., $C_i[N-1]$) dérivés d'un code de base $C_0$ sont :

$$C_i[n] = C_i[(n+i) \bmod N], n = 0, \ldots, N-1.$$

3. Procédé tel que revendiqué dans la revendication 1, dans lequel un code adjacent est fortement corrélé au code décalé de manière cyclique.

EP 1 133 068 B1

6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9959266 A
- US 5991333 A